(19) Europäisches Patentamt
European Patent Office
Office européen des brevets

(11) **EP 4 663 701 A1**

(12) **EUROPEAN PATENT APPLICATION**
published in accordance with Art. 153(4) EPC

(43) Date of publication:
**17.12.2025 Bulletin 2025/51**

(21) Application number: 24753373.0

(22) Date of filing: **07.02.2024**

(51) International Patent Classification (IPC):
**C08L 29/04** (2006.01)     **B32B 27/28** (2006.01)
**C08L 23/02** (2025.01)     **C08L 31/04** (2006.01)

(52) Cooperative Patent Classification (CPC):
**C08J 3/005; B32B 27/28; C08L 23/02; C08L 29/04; C08L 31/04;** C08J 2329/04; C08J 2423/06; C08J 2431/04; C08L 2205/03

(86) International application number:
**PCT/JP2024/004028**

(87) International publication number:
**WO 2024/166930 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.02.2023 JP 2023016542**
**07.02.2023 JP 2023016543**

(71) Applicant: **Mitsubishi Chemical Corporation Tokyo 100-8251 (JP)**

(72) Inventor: **YAMAMOTO, Nobuyuki Tokyo 100-8251 (JP)**

(74) Representative: **Hoffmann Eitle Patent- und Rechtsanwälte PartmbB Arabellastraße 30 81925 München (DE)**

(54) **RESIN COMPOSITION, MOLDED ARTICLE, MULTILAYER STRUCTURE, AND METHOD FOR MANUFACTURING RESIN COMPOSITION**

(57)     An ethylene-vinyl alcohol copolymer and an ethylene-vinyl acetate copolymer with excellent thermal stability are provided as follows. A resin composition contains an ethylene-vinyl alcohol copolymer (A) and an ethylene-vinyl acetate copolymer (B) containing carbon-14.

**Description**

TECHNICAL FIELD

The present disclosure relates to a resin composition containing an ethylene-vinyl alcohol copolymer and an ethylene-vinyl acetate copolymer containing carbon-14, a molded product made of the resin composition, a multilayer structure having a layer containing the resin composition, and a method for producing the resin composition.

BACKGROUND ART

Conventionally, ethylene-vinyl alcohol copolymers (hereinafter referred to as "EVOH") are mainly used in food packaging materials because of their excellent gas barrier properties and transparency. Although sheets, films, and the like used as the food packaging materials can be produced using the EVOH alone, other thermoplastic resins may be blended to improve physical properties and the like, or a layer of a polyolefin resin or the like may be laminated via an adhesive layer to form a multilayer structure to provide other functions.
On the other hand, in recent years, in order to reduce the environmental burden, it has been considered to replace some of the resins used in the multilayer structure with resins derived from biomass resources such as plants, instead of resins derived from petroleum.
For example, WO-A-2022/045259 discloses a resin composition containing a bio-polyethylene resin, an EVOH with an ethylene content of 20 to 60 mol%, and at least one component selected from the group consisting of an ethylene-vinyl acetate copolymer, an acid-modified polymer, and an ethylene-vinyl alcohol copolymer with an ethylene content of 70 to 90 mol%.

RELATED ART DOCUMENT

PATENT DOCUMENT

WO-A-2022/045259

SUMMARY

PROBLEMS TO BE SOLVED BY THE DISCLOSURE

Unfortunately, the resin composition containing an EVOH and an ethylene-vinyl acetate copolymer (hereinafter referred to as "EVA") disclosed in WO-A-2022/045259 does not have sufficient thermal stability, and there is room for further improvement.
The present disclosure provides a resin composition containing an EVOH and an EVA with excellent thermal stability.

MEANS FOR SOLVING THE PROBLEMS

In view of such a situation, the inventor of the present disclosure has found that the above problem can be solved by using an EVA containing carbon-14 as the EVA.
Specifically, the present disclosure has the following aspects.

[1] A resin composition containing an EVOH (A) and an EVA (B) containing carbon-14.
[2] The resin composition according to [1], wherein a mass content ratio of the EVOH (A) to the EVA (B) containing carbon-14 (EVOH (A)/EVA (B) containing carbon-14) in the resin composition is 1/99 to 99/1.
[3] The resin composition according to [1] or [2], further containing a polyolefin resin (C) containing carbon-14.
[4] The resin composition according to [3], wherein a content of the EVA (B) containing carbon-14 is 0.1 to 20 parts by mass per 100 parts by mass of a total of the EVOH (A) and the polyolefin resin (C) containing carbon-14.
[5] A molded product made of the resin composition according to any one of [1] to [4].
[6] A multilayer structure having a layer made of the resin composition according to any one of [1] to [4].
[7] A method for producing a resin composition, the method including mixing an EVOH (A) and an EVA (B) containing carbon-14.
[8] A method for producing a resin composition, the method including mixing an EVOH (A), an EVA (B) containing carbon-14, and a polyolefin resin (C) containing carbon-14.

EFFECTS OF THE DISCLOSURE

The resin composition according to the present disclosure has excellent thermal stability. The resin composition according to the present disclosure therefore can be suitably used as a raw material for molded products and multilayer structures.

EMBODIMENTS OF THE DISCLOSURE

Hereinafter the present disclosure will be described more specifically based on exemplary embodiments of the present disclosure. However, the present disclosure is not limited to these embodiments.

In the present disclosure, the expression "X to Y" (X and Y are each a given number) is intended to encompass the meaning of "preferably greater than X" or "preferably less than Y" unless otherwise specified, in addition to the meaning of "equal to or more than X and equal to or less than Y".

Further, the expression "equal to or more than X" (X is a given number) or "equal to or less than Y" (Y is a given number) is intended to encompass the meaning of "preferably more than X" or "preferably less than Y".

Further, the expression "X and/or Y" (X and Y are each a given configuration) is intended to mean at least one of X and Y and mean the following three meanings: only X; only Y; and X and Y.

A resin composition according to an exemplary embodiment of the present disclosure (hereinafter referred to as "the present resin composition") contains an EVOH (A) and an EVA (B) containing carbon-14.

Each component will be described below.

<EVOH (A)>

The EVOH (A) is a non-water-soluble thermoplastic resin usually obtained by saponifying an ethylene-vinyl ester copolymer which is a copolymer of ethylene and a vinyl ester monomer. Vinyl acetate is typically used as the vinyl ester monomer from an economic standpoint.

The polymerization of the ethylene and the vinyl ester monomer can be performed by any known polymerization method such as solution polymerization, suspension polymerization, or emulsion polymerization. Typically, solution polymerization using methanol as a solvent is used. The saponification of the resulting ethylene-vinyl ester copolymer may also be performed by any known method.

The thus produced EVOH (A) mainly contains an ethylene-derived structural unit and a vinyl alcohol structural unit, and usually contains a small amount of a vinyl ester structural unit left unsaponified.

Vinyl acetate is typically used as the vinyl ester monomer in terms of commercial availability and efficiency of impurity treatment during production. Other examples of the vinyl ester monomer other than vinyl acetate include aliphatic vinyl esters such as vinyl formate, vinyl propionate, vinyl valerate, vinyl butyrate, vinyl isobutyrate, vinyl pivalate, vinyl caprate, vinyl laurate, vinyl stearate, and vinyl versatate, and aromatic vinyl esters such as vinyl benzoate. Typically, an aliphatic vinyl ester having 3 to 20 carbon atoms, preferably 4 to 10 carbon atoms, and particularly preferably 4 to 7 carbon atoms can be used. These can be used alone or in combination of two or more.

The ethylene content in the EVOH (A) can be controlled by the pressure of ethylene when the vinyl ester monomer and the ethylene are copolymerized. The ethylene content is 20 to 60 mol%. The ethylene content is preferably 25 to 50 mol%, and particularly preferably 25 to 35 mol%. If the ethylene content is too low, the gas barrier properties in high humidity and the melt moldability tend to be reduced. Conversely, if the ethylene content is too high, the gas barrier properties tend to be reduced.

The ethylene content can be measured based on ISO 14663.

The saponification degree of the vinyl ester component in the EVOH (A) can be controlled by the amount of a saponification catalyst (usually, an alkaline catalyst such as sodium hydroxide is used), temperature, time, and the like when the ethylene-vinyl ester copolymer is saponified. The saponification degree is typically 90 to 100 mol%, preferably 95 to 100 mol%, and particularly preferably 99 to 100 mol%. If the saponification degree is too low, the gas barrier properties, thermal stability, moisture resistance, and the like tend to be reduced.

The saponification degree of the EVOH (A) can be measured based on JIS K6726 (where a solution obtained by homogeneously dissolving the EVOH in a water/methanol solvent is used).

The EVOH (A) has a melt flow rate (MFR) (at 210°C with a load of 2160 g) of typically 0.5 to 100 g/10 minutes, preferably 1 to 50 g/10 minutes, and particularly preferably 3 to 35 g/10 minutes. If the MFR is too high, the film formability tends to be unstable. If the MFR is too low, the viscosity becomes too high and the melt extrusion tends to be difficult. The MFR serves as an indicator of the degree of polymerization of the EVOH and can be adjusted by the amount of polymerization initiator and/or the amount of solvent when the ethylene and the vinyl ester monomer are copolymerized.

The EVOH (A) may further contain a structural unit derived from any of the following comonomers in a range that does not impair the effects of the present disclosure (for example, equal to or less than 10 mol% of the EVOH (A)).

Examples of the comonomers include olefins such as propylene, 1-butene, and isobutene; hydroxyl-containing α-olefins such as 3-buten-1-ol, 3-butene-1,2-diol, 4-penten-1-ol, and 5-hexene-1,2-diol, and derivatives including esterification products and acylation products of these hydroxyl-containing α-olefins; hydroxyalkylvinylidenes such as 2-methylenepropane-1,3-diol and 3-methylenepentane-1,5-diol; hydroxyalkylvinylidene diacetates such as 1,3-diacetoxy-2-methylenepropane, 1,3-dipropionyloxy-2-methylenepropane, and 1,3-dibutyryloxy-2-methylenepropane; unsaturated acids such as acrylic acid, methacrylic acid, crotonic acid, phthalic acid (anhydride), maleic acid (anhydride), and itaconic acid (anhydride), salts of these acids, and mono- or dialkyl esters of these acids, the one or two alkyl groups each having 1 to 18 carbon atoms; acrylamide and analogues thereof such as N-alkylacrylamides in which the alkyl has 1 to 18 carbon atoms, N,N-dimethylacrylamide, 2-acrylamidopropanesulfonic acid and salts thereof, and acrylamidopropyldimethylamine and acid salts or quaternary salts thereof; methacrylamide and analogues thereof such as N-alkylmethacrylamides in which the alkyl has 1 to 18 carbon atoms, N,N-dimethylmethacrylamide, 2-methacrylamidopropanesulfonic acid and salts thereof, and methacrylamidopropyldimethylamine and acid salts or quaternary salts thereof; N-vinylamides such as N-vinylpyrrolidone, N-vinylformamide, and N-vinylacetamide; vinyl cyanide compounds such as acrylonitrile and methacrylonitrile; vinyl ethers such as alkyl vinyl ether in which the alkyl has 1 to 18 carbon atoms, hydroxyalkyl vinyl ether, and alkoxyalkyl vinyl ether; halogenated vinyl compounds such as vinyl chloride, vinylidene chloride, vinyl fluoride, vinylidene fluoride, and vinyl bromide; vinyl silane compounds such as trimethoxyvinylsilane; halogenated allylated compounds such as allyl acetate and allyl chloride; allyl alcohol compounds such as allyl alcohol and dimethoxyallyl alcohol; trimethyl(3-acrylamido-3-dimethylpropyl)ammonium chloride, and acrylamido-2-methylpropanesulfonic acid. These can be used alone or in combination of two or more.

In particular, an EVOH copolymerized with hydroxyl-containing α-olefins, that is, an EVOH having a primary hydroxyl group in a side chain, is preferred in that good secondary formability is achieved while gas barrier properties are maintained. In particular, an EVOH having a 1,2-diol structure in a side chain is preferred. When the EVOH (A) is an EVOH having a primary hydroxyl group in a side chain, the content of the structural unit derived from a monomer having the primary hydroxyl group is typically 0.1 to 20 mol%, preferably 0.5 to 15 mol%, and particularly preferably 1 to 10 mol%.

Further, the EVOH (A) used in the present disclosure may be a "post-modified" EVOH, such as urethanized, acetalized, cyanoethylated, or oxyalkylenated EVOH.

Further, the EVOH (A) used in the present disclosure may be a mixture of two or more types of EVOH (A), for example, with different saponification degrees, different polymerization degrees, and different comonomers.

The content of the EVOH (A) in the present resin composition is typically equal to or more than 1% by mass, preferably equal to or more than 50% by mass, further preferably equal to or more than 60% by mass, and more preferably equal to or more than 70% by mass. The upper limit of the content of the EVOH (A) is typically 99% by mass. When the value of the content is within the above range, the effects of the present disclosure tend to be achieved more effectively.

<EVA (B) Containing Carbon-14>

The ethylene-vinyl acetate copolymer (EVA) is a polymer obtained by copolymerizing ethylene and vinyl acetate.

The term "EVA containing carbon-14" means an EVA obtained by chemical or biological synthesis from a renewable biomass resource as a raw material. The EVA containing carbon-14 (hereafter also referred to as $^{14}C$) is characterized in that, due to the carbon neutral nature of biomass, it does not increase the concentration of carbon dioxide in the atmosphere even when incinerated.

There is no clear difference between EVA containing carbon-14 and petroleum-derived EVA in physical properties such as molecular weight and mechanical properties.

Therefore, biobased content is commonly used to distinguish between these EVAs. The biobased content is used as an index of the percentage of the EVA containing carbon-14, based on the fact that the carbon in petroleum-derived EVA does not contain $^{14}C$ (radiocarbon-14, half-life 5730 years), but the carbon in plant-derived EVA contains $^{14}C$. The $^{14}C$ concentration is measured by accelerator mass spectrometry. Any film made of the EVA containing carbon-14 has a biobased content corresponding to the content of plant-derived EVA. In other words, the EVA containing carbon-14 is characterized by containing radiocarbon ($^{14}C$).

The biobased content can be determined, for example, by heating and stirring the present resin composition in a water/methanol mixed solvent to dissolve the EVOH (A) and measuring the content of carbon-14 ($^{14}C$) of the remaining EVA by the following method.

A sample to be measured is burned to produce carbon dioxide, which is then purified in a vacuum line and reduced with hydrogen using iron as a catalyst to produce graphite. The graphite is then loaded in a dedicated $^{14}C$-AMS device (from NEC Corporation) based on a tandem accelerator to measure the $^{14}C$ count, the $^{13}C$ concentration ($^{13}C/^{12}C$), and the $^{14}C$ concentration ($^{14}C/^{12}C$). Then, the ratio of $^{14}C$ concentration of the sample carbon to standard modern carbon is calculated from these measurements, and the biobased content is determined in accordance with ASTM D6866.

The aforementioned biobased content is used to distinguish between the plant (biomass resource)-derived EVA and the petroleum-derived EVA, and the measurement method is as described above.

The content of carbon-14 in the EVA (B) containing carbon-14 is not particularly limited, but the ratio of carbon-14 to the total carbon in the EVA (B) containing carbon-14 is typically equal to or more than $1.0 \times 10^{-14}$, and preferably equal to or more than $1.0 \times 10^{-13}$. The upper limit is typically $1.2 \times 10^{-12}$.

Since the present resin composition contains the EVA (B) containing carbon-14, the present resin composition has excellent thermal stability compared with conventional resin compositions containing petroleum-derived EVA. This is presumably because the EVA containing carbon-14 ($^{14}$C) has a stronger binding energy due to a primary isotope effect, which slows decomposition and increases thermal stability.

Examples of the EVA (B) containing carbon-14 include ethylene derived from ethanol containing carbon-14 obtained from plant materials and EVA containing carbon-14 obtained by polymerizing vinyl acetate containing carbon-14. Among those, the plant-derived ethylene derived from ethanol containing carbon-14 obtained from plant materials is preferably used as the EVA (B) containing carbon-14.

The content of vinyl acetate in the EVA (B) containing carbon-14 is typically 1 to 60 mol%, preferably 2 to 50 mol%, and particularly preferably 3 to 30 mol%. If the vinyl acetate content is too low, the compatibility with the EVOH (A) tends to be low. Conversely, if the vinyl acetate content is too high, the resin composition tends to be hard and have reduced physical properties.

The EVA (B) containing carbon-14 may be a modified EVA containing carbon-14 that contains a carboxy group obtained by chemically bonding an unsaturated carboxylic acid or anhydride thereof by addition reaction, graft reaction, or the like in a range that does not impair the spirit of the present disclosure. When the modified EVA containing carbon-14 is used, it is preferable that the amount of such modification is, for example, specifically equal to or less than 10 mol%.

Examples of the unsaturated carboxylic acid or anhydride thereof include ethylenically unsaturated monocarboxylic acids such as acrylic acid, methacrylic acid, ethacrylic acid, and crotonic acid, and ethylenically unsaturated dicarboxylic acids such as fumaric acid, itaconic acid, citraconic acid, maleic acid, monomethyl maleate, and monoethyl maleate, and anhydrides, half esters, and the like of the ethylenically unsaturated dicarboxylic acids. Among those, maleic anhydride is preferred.

The biobased content of the EVA (B) containing carbon-14 is typically 0.01 to 99.99%, preferably 1 to 99%, more preferably 5 to 95%, even more preferably 10 to 93%, and particularly preferably 50 to 90%. When the biobased content of the EVA (B) containing carbon-14 is in the above range, the resin composition tends to have excellent thermal stability.

The EVA (B) containing carbon-14 has a melt flow rate (MFR) (at 190°C with a load of 2160 g) of typically 0.1 to 100 g/10 minutes, preferably 0.5 to 50 g/10 minutes, and particularly preferably 1 to 30 g/10 minutes. If the MFR is outside the above range, extrusion moldability tends to be poor.

The EVA (B) containing carbon-14 can be used alone or in combination with two or more types of EVA containing carbon-14 with different vinyl acetate contents, molecular weights, MFRs, densities, modified groups, amounts of modification, and the like.

The content of the EVA (B) containing carbon-14 is typically 0.1 to 30% by mass, preferably 0.5 to 20% by mass, and particularly preferably 1 to 10% by mass, of the present resin composition. When the content of the EVA (B) containing carbon-14 is in the above range, the resin composition tends to have excellent thermal stability.

The mass content ratio of the EVOH (A) to the EVA (B) containing carbon-14 (EVOH (A)/EVA (B) containing carbon-14) in the present resin composition is preferably 1/99 to 99/1, more preferably 50/50 to 99/1, even more preferably 60/40 to 99/1, particularly preferably 70/30 to 99/1, even more preferably 72/28 to 95/5, especially preferably 75/25 to 90/10, and most preferably 75/25 to 85/15. When the mass content ratio of the EVOH (A) to the EVA (B) containing carbon-14 is within the above range, the resin composition tends to have even more excellent thermal stability.

The total content of the EVOH (A) and the EVA (B) containing carbon-14 in the present resin composition is typically equal to or more than 70% by mass, preferably equal to or more than 80% by mass, and more preferably equal to or more than 90% by mass, but is not limited to this.

<Polyolefin Resin (C) Containing Carbon-14>

It is preferable that the present resin composition contains a polyolefin resin (C) containing carbon-14 [hereinafter polyolefin resin may be referred to as "PO"] for more excellent thermal stability.

The term "polyolefin resin containing carbon-14" means a polyolefin resin obtained by chemical or biological synthesis from a renewable biomass resource as a raw material. The PO containing carbon-14 is characterized in that, due to the carbon neutral nature of biomass, it does not increase the concentration of carbon dioxide in the atmosphere even when incinerated.

There is no difference between PO containing carbon-14 and petroleum-derived PO in physical properties such as molecular weight and mechanical properties.

Therefore, in order to distinguish between them, the above biobased content is commonly used. The biobased content can be determined, for example, by heating and stirring the present resin composition in a water/methanol mixed solvent to dissolve the EVOH (A) and measuring the content of carbon-14 ($^{14}$C) of the remaining PO containing C-14 by the method described above.

The content of carbon-14 in the PO (C) containing carbon-14 is not particularly limited, but the ratio of carbon-14 to the total carbon in the PO (C) containing carbon-14 is typically equal to or more than $1.0 \times 10^{-14}$, and preferably equal to or more than $1.0 \times 10^{-13}$. The upper limit is typically $1.2 \times 10^{-12}$.

The biobased content of the PO (C) containing carbon-14 is typically 0.01 to 99.99%, preferably 1 to 99%, more preferably 5 to 98%, and particularly preferably 10 to 95%. When the biobased content of the PO (C) containing carbon-14 is in the above range, the resin composition tends to have excellent thermal stability.

The PO (C) containing carbon-14 may be any PO that contains a renewable biomass resource as a raw material. Examples of the PO include polyethylenes such as low-density polyethylenes, linear low-density polyethylenes, medium-density polyethylenes, and high-density polyethylenes; ethylene copolymers obtained by copolymerizing ethylene with α-olefins such as 1-butene, 1-hexene, and 4-methyl-1-pentene; poly(1-butene), poly(4-methyl-1-pentene), and the like. These may be used alone, or a mixture of two or more with different copolymerization compositions and physical properties may be used. Among those, low-density polyethylene (low-density polyethylene containing carbon-14) is preferred.

Plant-derived ethylene derived from ethanol containing carbon-14 obtained from plant materials is preferably used as the low-density polyethylene containing carbon-14. In other words, the low-density polyethylene containing carbon-14 is preferably a plant-derived low-density polyethylene resin.

The low-density polyethylene resin containing carbon-14 is preferably a low-density polyethylene resin containing carbon 14 (LDPE, a density of less than 0.925 g/cm$^3$), excluding a linear low-density polyethylene resin containing carbon-14 (LLDPE, a density of 0.910 to 0.925 g/cm$^3$).

Examples of the low-density polyethylene resin containing carbon-14 include a low-density polyethylene homopolymer containing carbon-14 and a low-density polyethylene copolymer containing carbon-14. The low-density polyethylene copolymer containing carbon-14 is a copolymer of ethylene and a small amount of a comonomer, for example, a copolymer of ethylene with another α-olefin monomer with a mass fraction of less than 50% or a non-olefin monomer having a functional group with a mass fraction of 3% or less.

Examples of the other α-olefin include α-olefins having 3 to 20 carbon atoms, such as propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosen, 3-methyl-1-butene, 4-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, and 12-ethyl-1-tetradecene. These may be used alone or in combination of two or more.

Examples of the non-olefin monomer include styrene monomers, diene monomers, cyclic monomers, and oxygen-containing monomers. These may be used alone or in combination of two or more.

Examples of the styrene monomers include styrene, 4-methylstyrene, and 4-dimethylaminostyrene.

Examples of the diene monomers include 1,3-butadiene, 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene-8-methyl-1,7-nonadiene, 4,8-dimethyl-1,4,8-decatriene (DMDT), dicyclopentadiene, cyclohexadiene, and dicyclooctadiene.

Examples of the cyclic monomers include methylenenorbornene, 5-vinylnorbornene, 5-ethylidene-2-norbornene, 5-methylene-2-norbornene, 5-isopropylidene-2-norbornene, 6-chloromethyl-5-isopropenyl-2-norbornene, 2,3-diisopropylidene-5-norbornene, 2-ethylidene-3-isopropylidene-5-norbornene, and 2-propenyl-2,2-norbornadiene, and cyclopentene.

Examples of the oxygen-containing monomers include hexenol, hexenoic acid, and methyl octenoate.

The other α-olefin and non-olefin monomers may be made from renewable biomass resources or from petroleum as raw materials. When renewable biomass resources are used as raw materials, the biobased content of the final product can be further increased. When petroleum is used as a raw material, a wide variety of materials are available, so the physical properties and the like of the low-density polyethylene resin containing carbon-14 can be easily adjusted by producing using these materials.

The low-density polyethylene resin containing carbon-14 can be obtained, for example, by polymerizing ethylene alone or copolymerizing ethylene and any comonomer using a metallocene catalyst or a Ziegler-Natta catalyst according to the usual method. In particular, the metallocene catalyst is preferably used.

The low-density polyethylene resin containing carbon-14 has a melt flow rate (MFR) (at 190°C with a load of 2160 g) of typically 0.1 to 50 g/10 minutes, preferably 0.5 to 30 g/10 minutes, and particularly preferably 2 to 10 g/10 minutes.

If the MFR is too high, the film formability tends to be unstable. If the MFR is too low, the viscosity becomes too high and the melt extrusion tends to be difficult.

A commercially available product of the low-density polyethylene resin containing carbon-14 is, for example, SEB853 (from Braskem S.A.).

The content of the PO (C) containing carbon-14 is typically 1 to 50% by mass, preferably 5 to 45% by mass, and particularly preferably 10 to 40% by mass, of the present resin composition.

The mass ratio [(A)/(C)] of the EVOH (A) to the PO (C) containing carbon-14 in the present resin composition is typically 51/49 to 90/10, preferably 55/45 to 80/20, and particularly preferably 60/40 to 70/30. If the ratio of the EVOH (A) is too high, the moldability at low temperatures tends to decrease. On the other hand, if the amount of the PO (C) containing carbon-14 is too large, the pellet shape tends to deteriorate.

The mass ratio [(B)/(C)] of the EVA (B) containing carbon-14 to the PO (C) containing carbon-14 is typically 1/99 to 30/70, preferably 5/95 to 25/75, and particularly preferably 10/90 to 20/80. When the mass ratio of the EVA (B) containing carbon-14 to the PO (C) containing carbon-14 is in the above range, the resin composition tends to have excellent thermal stability.

When the present resin composition contains the PO (C) containing carbon-14, the base polymers in the present resin composition are preferably the EVOH (A) and the PO (C) containing carbon-14, and the content of the base polymers in the resin composition is usually equal to or more than 60% by mass, preferably equal to or more than 70% by mass, and particularly preferably equal to or more than 80% by mass. The upper limit of the content of the base polymers is typically 99.9% by mass.

[Other Components]

The present resin composition can contain resins (for example, petroleum-derived modified EVA, petroleum-derived polyethylene resin, adhesive resin, etc.) other than the EVOH (A), the EVA (B) containing carbon-14, and the PO (C) containing carbon-14, optional additives, and the like (hereinafter these are referred to as "other components") according to the intended purposes of the resin composition, in a range that does not significantly impair the effects of the present disclosure. One kind of other components may be used, or any combination of two or more kinds in any proportions may be used.

Examples of the additives include antioxidants, UV absorbers, plasticizers, lubricants, fillers, and antistatic agents.

When the present resin composition contains the other additives, the content of the other additives is typically equal to or less than 30% by mass, preferably equal to or less than 20% by mass, and more preferably equal to or less than 10% by mass, of the present resin composition.

[Method for Producing Resin Composition]

The present resin composition can be produced by mixing the EVOH (A) and the EVA (B) containing carbon-14, and the other components described above if necessary.

When the present resin composition contains the PO (C) containing carbon-14, the present resin composition can be produced by mixing the EVOH (A), the EVA (B) containing carbon-14, and the PO (C) containing carbon-14, and the other components described above if necessary.

The mixing can be performed by a known method such as dry blending method, melt mixing method, solution mixing method, or impregnation method. These methods can be combined as desired.

The biobased content of the present resin composition thus obtained is typically 1 to 99%, preferably 10 to 90%, more preferably 15 to 70%, and particularly preferably 20 to 50%. The biobased content of the present resin composition is calculated by the following formula.

$$\text{Biobased content (\%)} = M_1/M_2 \times 100$$

In the above formula, $M_1$ is the total mass of the EVA (B) containing carbon-14 and the PO (C) containing carbon-14 used, and $M_2$ is the total mass of the resins used.

The present resin composition has a melt flow rate (MFR) (at 210°C with a load of 2160 g) of typically 0.1 to 50 g/10 minutes, preferably 0.5 to 30 g/10 minutes, and particularly preferably 2 to 10 g/10 minutes.

The present resin composition typically has a water content of 0.01 to 0.5% by mass, preferably 0.02 to 0.35% by mass, and particularly preferably 0.05 to 0.3% by mass.

The water content of the present resin composition is measured and calculated by the following method.

The mass ($W_1$) of the resin composition before drying is weighed by an electronic scale and the resin composition is dried in a hot-air dryer at 150°C for 5 hours. The mass ($W_2$) of the resin composition after cooling in a desiccator for 30 minutes is weighed, and the water content is calculated according to the following formula.

$$\text{Water content (\% by mass)} = [(W_1 - W_2)/W_1] \times 100$$

The present resin composition is prepared in various forms of resin composition, such as pellets and powders, and is provided as a material for various molded products and multilayer structures. In particular, in the present disclosure, the present resin composition is preferably provided as a material for melt molding, because the effects of the present disclosure tend to be achieved more efficiently.

[Molded Product]

A molded product according to an exemplary embodiment of the present disclosure (hereinafter referred to as "the present molded product") is made by molding the present resin composition.

Examples of the shape of the present molded product include films, sheets, tapes, cups, trays, tubes, bottles, pipes, filaments, extruded products with modified cross sections, and various molded products with irregular shapes.

The present resin composition can be molded by any method. Any molding method applicable to common resin compositions can be employed. Examples of the molding method include extrusion molding, blow molding, injection molding, and thermoforming.

[Multilayer Structure]

A multilayer structure according to an exemplary embodiment of the present disclosure (hereinafter referred to as "the present multilayer structure") has a layer made of the present resin composition (hereinafter referred to as "resin composition layer") in the form of a film or sheet.

In the present multilayer structure, another base material (hereinafter referred to as "base material resin") mainly composed of a thermoplastic resin other than the present resin composition can be laminated to impart further strength or impart other functions.

Examples of the base material resin include (unmodified) polyolefin resins including polyethylene resins such as linear low-density polyethylenes, low-density polyethylenes, very-low-density polyethylenes, medium-density polyethylenes, high-density polyethylenes, ethylene-propylene (block and random) copolymers, and ethylene-$\alpha$-olefin ($\alpha$-olefin having 4 to 20 carbon atoms) copolymers, polypropylene resins such as polypropylenes and propylene-$\alpha$-olefin ($\alpha$-olefin having 4 to 20 carbon atoms) copolymers, polybutenes, polypentenes, and polycycloolefin resins (polymers having a cycloolefin structure in a main chain and/or a side chain thereof), polyolefin resins in a broader sense including modified olefin resins such as unsaturated carboxyl-modified polyolefin resins obtained by graft-modifying any of the aforementioned polyolefin resins with an unsaturated carboxylic acid or an unsaturated carboxylic acid ester, ionomers, ethylene-vinyl acetate copolymers, ethylene-acrylic acid copolymers, ethylene-acrylate copolymers, polyester resins, polyamide resins (including polyamide copolymers), polyvinyl chlorides, polyvinylidene chlorides, acrylic resins, polystyrene resins, vinyl ester resins, polyester elastomers, polyurethane elastomers, polystyrene elastomers, halogenated polyolefins such as chlorinated polyethylenes and chlorinated polypropylenes, and aromatic and aliphatic polyketones.

Among these, the polyamide resins, the polyolefin resins, the polyester resins, and the polystyrene resins are preferred in terms of cost efficiency and productivity. The polyolefin resins such as the polyethylene resins, the polypropylene resins, the polycycloolefin resins, and the unsaturated carboxyl-modified polyolefin resins are more preferred.

When a resin composition layer is "a" (a1, a2, ...) and a base material resin layer is "b" (b1, b2, ...), the layered configuration of the present multilayer structure may be any combination, such as a/b, b/a/b, a/b/a, a1/a2/b, a/b1/b2, b2/b1/a/b1/b2, or b2/b1/a/b1/a/b1/b2. It is also possible to provide a recycled layer containing a mixture of the present resin composition and the base material resin, which is obtained by re-melt-molding discards or defectives occurring in the process of producing the present multilayer structure. The total number of layers in the present multilayer structure is typically 2 to 15, and preferably 3 to 10. In the above layered configurations, an adhesive resin layer containing an adhesive resin may be interposed between individual layers, if necessary.

A known adhesive resin can be used as the adhesive resin. The adhesive resin can be selected as appropriate depending on the kind of thermoplastic resin used in the base material resin layer "b". Typical examples include carboxy-containing modified polyolefin polymers obtained by chemically bonding an unsaturated carboxylic acid or anhydride thereof to a polyolefin resin by addition reaction, graft reaction, or the like. Examples of the carboxy-containing modified polyolefin polymers include polyethylenes graft-modified with maleic anhydride, polypropylenes graft-modified with maleic anhydride, ethylene-propylene (block and random) copolymers graft-modified with maleic anhydride, ethylene-ethyl acrylate copolymers graft-modified with maleic anhydride, ethylene-vinyl acetate copolymers graft-modified with maleic anhydride, polycycloolefin resins modified with maleic anhydride, and polyolefin resins graft-modified with maleic anhydride. One kind or a mixture of two or more kinds selected from these polymers can be used.

In the present multilayer structure, when the adhesive resin layer is used between the resin composition layer and the base material resin layer, it is preferable to use an adhesive resin having excellent hydrophobicity, because the adhesive resin layer is located on both sides of the resin composition layer.

The base material resin and the adhesive resin may contain plasticizer, filler, clay (such as montmorillonite), colorant, antioxidant, antistatic agent, lubricant, nucleating agent, antiblocking agent, wax, and the like as conventionally known, in a range that does not impair the spirit of the present disclosure (for example, equal to or less than 30% by mass, preferably equal to or less than 10% by mass of the total of the resins).

The lamination of the present resin composition and the base material resin (including the case where the adhesive resin layer is interposed) can be performed by a known method. Examples of the laminating method include: a method in which the resin composition layer is laminated with the base material resin by melt extrusion; a method in which the base material resin layer is laminated with the present resin composition by melt extrusion; a method in which the present resin composition and the base material resin are co-extruded; a method in which the present resin composition layer and the base material resin layer are dry-laminated using a known adhesive agent such as organic titanium compound, isocyanate compound, polyester compound, or polyurethane compound; and a method in which a solution of the present resin composition is applied on the base material resin, and then the solvent is removed. Among these methods, in terms of cost and environment, the method in which the present resin composition and the base material resin are co-extruded is preferred.

The present multilayer structure undergoes a (heat) stretching process, if necessary. The stretching process may be either uniaxial stretching or biaxial stretching. The biaxial stretching may be either simultaneous stretching or sequential stretching. As a stretching method, a method with a high stretch ratio can be employed among roll stretching, tenter stretching, tubular stretching, stretch blow, and vacuum pressure forming methods. The stretching temperature is selected from the range of about typically 40 to 170°C, preferably 60 to 160°C, which is a temperature near the melting point of the present multilayer structure. If the stretching temperature is too low, the stretchability is poor. If the stretching temperature is too high, it is difficult to maintain a stable stretch state.

It is noted that heat setting may be performed after the stretching process in order to impart dimension stability after stretching. The heat setting can be performed by known means. For example, the stretched film is subjected to thermal treatment with a tension state being kept, typically at 80 to 180°C and preferably at 100 to 165°C, typically for about 2 to 600 seconds. When the stretched film obtained by stretching the present multilayer structure is used as a shrinkable film, for example, a cold-setting process for imparting a heat-shrinkable property may be performed by applying cold air to the stretched film, without performing the heat setting.

In some cases, a cup or tray-shaped multilayer container may be produced from the present multilayer structure. In this case, a drawing process is typically employed. Specific examples include vacuum forming method, pressure forming method, vacuum pressure forming method, and plug-assisted vacuum pressure forming method. When a tube or bottle-shaped multilayer container (laminate structure) is produced from a multilayer parison (a hollow tubular preform before blowing), a blow molding method is employed. Specific examples include extrusion blow molding method (twin head type, mold shift type, parison shift type, rotary type, accumulator type, horizontal parison type, etc.), cold parison blow molding method, injection blow molding method, and biaxial stretching blow molding method (extrusion type cold parison biaxial stretching blow molding method, injection type cold parison biaxial stretching blow molding method, injection inline type biaxial stretching blow molding method, etc.). The resulting laminate may be subjected to heating process, cooling process, rolling process, printing process, dry laminating process, solution or melt coating process, bag forming process, deep drawing process, box forming process, tube forming process, splitting process, or the like, if necessary.

The thickness of the present multilayer structure (including the stretched multilayer structure) and the thicknesses of the present resin composition layer, the base material resin layer, and the adhesive resin layer that constitute the present multilayer structure may vary with the layered configuration, the kind of base material resin, the kind of adhesive resin, intended use, packaging form, required physical properties, and the like, but the thickness of the present multilayer structure (including the stretched multilayer structure) is typically 10 to 5000 $\mu$m, preferably 30 to 3000 $\mu$m, and particularly preferably 50 to 2000 $\mu$m. The thickness of the resin composition layer is typically 1 to 500 $\mu$m, preferably 3 to 300 $\mu$m, and particularly preferably 5 to 200 $\mu$m. The thickness of the base material resin layer is typically 5 to 3000 $\mu$m, preferably 10 to 2000 $\mu$m, and particularly preferably 20 to 1000 $\mu$m. The thickness of the adhesive resin layer is typically 0.5 to 250 $\mu$m, preferably 1 to 150 $\mu$m, and particularly preferably 3 to 100 $\mu$m.

Further, the thickness ratio of the resin composition layer to the base material resin layer in the present multilayer structure (resin composition layer/base material resin layer) is typically 1/99 to 50/50, preferably 5/95 to 45/55, and particularly preferably 10/90 to 40/60, where if these layers each include a plurality of layers, the thickness ratio is the ratio between the thickest one of the resin composition layers and the thickest one of the base material resin layers. Further, the thickness ratio of the resin composition layer to the adhesive resin layer in the present multilayer structure (resin composition layer/adhesive resin layer) is typically 10/90 to 99/1, preferably 20/80 to 95/5, and particularly preferably 50/50 to 90/10, where if these layers each include a plurality of layers, the thickness ratio is the ratio between the thickest one of the resin composition layers and the thickest one of the adhesive resin layers).

Bags made of the thus obtained films, sheets, or stretched films and containers such as cups, trays, tubes, and bottles are suitable for various packaging materials and containers for general foods, condiments such as mayonnaise and dressing, fermented foods such as miso, fat and oil foods such as salad oil, beverages, cosmetics, and pharmaceutical products.

EXAMPLES

The present disclosure will be described more specifically below with examples. However, it should be understood that the present disclosure is not limited to the following examples within the scope of the present disclosure. In the examples, "parts" and "%" are based on mass unless otherwise specified.

Prior to the examples, the following components were prepared.

[EVOH (A)]

- EVOH (A1): ethylene content of 29 mol%, MFR of 3.8 g/10 minutes (at 210°C with a load of 2160 g), saponification degree of 99.9 mol%
- EVOH (A2): ethylene content of 44 mol%, MFR of 3.5 g/10 minutes (at 210°C with a load of 2160 g), saponification degree of 99.9 mol%

[EVA (B) Containing Carbon-14]

- EVA (B1) containing carbon-14: EVA containing carbon-14 (SVT2180 from Braskem S.A.), MFR of 2.1 g/10 minutes (at 190°C with a load of 2160 g), biobased content of equal to or more than 80%.
- EVA (B2) containing carbon-14: EVA containing carbon-14 (SVT2145R from Braskem S.A.), MFR of 2.1 g/10 minutes (at 190°C with a load of 2160 g), biobased content of equal to or more than 45%

[Petroleum-Derived EVA (B')]

- Petroleum-derived EVA (B'1): petroleum-derived EVA (ULTRATHENE 630 from Tosoh Corporation)

[PO (C) Containing Carbon-14]

- PO (C1) containing carbon-14: low- density polyethylene containing carbon-14 [SEB853 (Green PE from Braskem S.A.), MFR of 2.7 g/10 minutes (at 190°C with a load of 2160 g), minimum biobased content of 95% (plant derived)]

<Example 1>

After 90 parts of the EVOH (A1) and 10 parts of the EVA (B1) containing carbon-14 were mixed in a batch by dry blending, the mixture was fed into a twin-screw kneader at a rate of 8 kg/hour using a mass metric feeder and cut into a strand by a drum pelletizer to prepare a pellet-like resin composition. The kneading conditions are as follows.

[Kneading Conditions]

- Twin-screw extruder: 20 mm diameter, L/D=48 (from TOSHIBA MACHINE)
- Extruder setting temperature: C1/C2/C3/C4/C5/C6/H = 150/200/210/210/210/210/210
- Screw rotation speed: 250 rpm
- Take-up speed: 10 m/min

[Examples 2 to 7, Comparative Examples 1 to 5]

Resin compositions of Examples 2 to 7 and Comparative Examples 1 to 5 were prepared in the same way as in Example 1 except that the kind and amount of each component were changed as listed in Tables 1 and 2 below.

The resulting resin compositions of Examples 1 to 7 and Comparative Examples 1 to 5 were evaluated for thermal stability as described below. The results are shown in Tables 1 and 2 below.

[Thermal Stability Evaluation 1]

[Loss Temperature Difference]

The pellet-like resin compositions obtained in Examples 1 to 6 and Comparative Examples 1 to 4 were used each in an amount of 5 mg, and the mass loss rate of each composition with temperature increased at 10°C/min under a nitrogen atmosphere was measured using a thermogravimeter (Pyris 1 TGA from Perkin Elmer, Inc.). Subsequently, the temperature at a 5% mass loss of the resin composition was subtracted from the temperature at a 10% mass loss (loss temperature difference). The higher the resulting value, the slower the resin composition decomposes, which means that the resin composition has excellent thermal stability.

[Thermal Stability Improvement Rate]

The thermal stability improvement rate was determined according to the following formula, where the value of the loss temperature difference for the comparative example corresponding to each example (for example, the comparative example corresponding to Example 1 is Comparative Example 1) is 100.

Thermal stability improvement rate (%) = (value of loss temperature difference in Example / value of loss temperature difference in Comparative Example corresponding to Example $\times$ 100) - 100

(The thermal stability improvement rate (%) was rounded to the nearest whole number.)

[Thermal Stability Evaluation 2]

[Loss Temperature Difference]

The pellet-like resin compositions obtained in Examples 1 to 3 and 7 and Comparative Examples 1 to 2 and 5 were used each in an amount of 5 mg, and the mass loss rate of each composition with temperature increased at 10°C/min under a nitrogen atmosphere was measured using a thermogravimeter (Pyris 1 TGA from Perkin Elmer, Inc.). The first derivative of the obtained curve was then plotted, and the temperature at a 10% mass loss was subtracted from the temperature at the minimum of the derivative curve (the temperature at which the weight loss rate is greatest, that is, the temperature at which decomposition progresses the most) (loss temperature difference). The higher the resulting value, the slower the resin composition decomposes, which means that the resin composition has excellent thermal stability.

[Thermal Stability Improvement Rate]

The thermal stability improvement rate was determined according to the following formula, where the value of the loss temperature difference for the comparative example corresponding to each example (for example, the comparative example corresponding to Example 1 is Comparative Example 1) is 100.

Thermal stability improvement rate (%) = (value of loss temperature difference in Example / value of loss temperature difference in Comparative Example corresponding to Example $\times$ 100) - 100

(The thermal stability improvement rate (%) was rounded to the nearest whole number.)

Table 1

| | Resin composition | | | | Thermal stability evaluation 1 | |
|---|---|---|---|---|---|---|
| | EVOH(A) [mass%] | EVA(B) containing carbon-14 [mass%] | Petroleum-derived EVA(B') [mass%] | PC(C) containing carbon-14 [mass%] | Loss temperature difference (°C) | Thermal stability improvement rate (%) |
| Example 1 | 90(A1) | 10(B1) | - | - | 18 | 29 |
| Example 2 | 90(A1) | 10(B2) | - | - | 16 | 14 |
| Example 3 | 90(A2) | 10(B1) | - | - | 14 | 40 |

(continued)

| | Resin composition | | | | Thermal stability evaluation 1 | |
|---|---|---|---|---|---|---|
| | EVOH(A) [mass%] | EVA(B) containing carbon-14 [mass%] | Petroleum-derived EVA(B') [mass%] | PC(C) containing carbon-14 [mass%] | Loss temperature difference (°C) | Thermal stability improvement rate (%) |
| Example 4 | 70(A1) | 5(B1) | - | 25(C1) | 26 | 44 |
| Example 5 | 60(A1) | 5(B1) | - | 35(C1) | 38 | 111 |
| Example 6 | 70(A1) | 5(B2) | - | 25(C1) | 20 | 11 |
| Comparative Example 1 | 90(A1) | - | 10(B'1) | - | 14 | - |
| Comparative Example 2 | 90(A2) | - | 10(B'1) | - | 10 | - |
| Comparative Example 3 | 70(A1) | - | 5(B'1) | 25(C1) | 18 | - |
| Comparative Example 4 | 60(A1) | - | 5(B'1) | 35(C1) | 18 | - |

Table 2

| | Resin composition | | | | Thermal stability evaluation 2 | |
|---|---|---|---|---|---|---|
| | EVOH(A) [mass%] | EVA(B) containing carbon-14 [mass%] | Petroleum-derived EVA(B') [mass%] | PO(C) containing carbon-14 [mass%] | Loss temperature difference (°C) | Thermal stability improvement rate (%) |
| Example 1 | 90(A1) | 10(B1) | - | - | 40 | 14 |
| Example 2 | 90(A1) | 10(B2) | - | - | 36 | 3 |
| Example 3 | 90(A2) | 10(B1) | - | - | 32 | 7 |
| Example 7 | 50(A1) | 50(B1) | - | - | 29 | 4 |
| Comparative Example 1 | 90(A1) | - | 10(B'1) | - | 35 | - |
| Comparative Example 2 | 90(A2) | - | 10(B'1) | - | 30 | - |
| Comparative Example 5 | 50(A1) | - | 50(B'1) | - | 28 | - |

The results in Tables 1 and 2 show that the resin compositions of Examples 1 and 2 using the EVA containing carbon-14 have improved thermal stability compared with Comparative Example 1 using the petroleum-derived EVA. Similarly, it is shown that the resin composition of Example 3 using the EVA containing carbon-14 has improved thermal stability compared with Comparative Example 2 using the petroleum-derived EVA. In Example 7 in which the content ratio between the EVOH and the EVA containing carbon-14 was changed, the thermal stability is also improved compared with Comparative Example 5 using the petroleum-derived EVA.

Further, it is shown that the resin compositions of Examples 4 to 6 containing the PO containing carbon-14 have an improved thermal stability compared with the respective corresponding resin compositions of Comparative Examples 3 and 4.

The reason for such improved thermal stability is presumably that compared with the petroleum-derived EVA and PO, the EVA and PO containing carbon-14 ($^{14}$C) have a stronger binding energy due to a primary isotope effect, which slows decomposition and increases thermal stability.

While specific forms of embodiments of the present disclosure have been shown in the above examples, the examples are merely illustrative and are not intended to be interpreted as being limitative. It is contemplated that all various modifications apparent to those skilled in the art could be made within the scope of the present disclosure.

INDUSTRIAL APPLICABILITY

The present resin composition can have higher thermal stability than resin compositions using petroleum-derived EVA. Therefore, a molded product made of the present resin composition and a multilayer structure having a layer containing the present resin composition are useful as materials for various packaging containers.

**Claims**

1. A resin composition comprising an ethylene-vinyl alcohol copolymer (A) and an ethylene-vinyl acetate copolymer (B) containing carbon-14.

2. The resin composition according to claim 1, wherein a mass content ratio of the ethylene-vinyl alcohol copolymer (A) to the ethylene-vinyl acetate copolymer (B) containing carbon-14 (ethylene-vinyl alcohol copolymer (A)/ethylene-vinyl acetate copolymer (B) containing carbon-14) in the resin composition is 1/99 to 99/1.

3. The resin composition according to claim 1, further comprising a polyolefin resin (C) containing carbon-14.

4. The resin composition according to claim 3, wherein a content of the ethylene-vinyl acetate copolymer (B) containing carbon-14 is 0.1 to 20 parts by mass per 100 parts by mass of a total of the ethylene-vinyl alcohol copolymer (A) and the polyolefin resin (C) containing carbon-14.

5. A molded product comprising the resin composition according to any one of claims 1 to 4.

6. A multilayer structure comprising a layer comprising the resin composition according to any one of claims 1 to 4.

7. A method for producing a resin composition, the method comprising mixing an ethylene-vinyl alcohol copolymer (A) and an ethylene-vinyl acetate copolymer (B) containing carbon-14.

8. A method for producing a resin composition, the method comprising mixing an ethylene-vinyl alcohol copolymer (A), an ethylene-vinyl acetate copolymer (B) containing carbon-14, and a polyolefin resin (C) containing carbon-14.

## INTERNATIONAL SEARCH REPORT

| | International application No. |
|---|---|
| | **PCT/JP2024/004028** |

### A. CLASSIFICATION OF SUBJECT MATTER

*C08L 29/04*(2006.01)i; *B32B 27/28*(2006.01)i; *C08L 23/02*(2006.01)i; *C08L 31/04*(2006.01)i
FI: C08L29/04 C; C08L31/04 S; B32B27/28 101; B32B27/28 102; C08L23/02

According to International Patent Classification (IPC) or to both national classification and IPC

### B. FIELDS SEARCHED

Minimum documentation searched (classification system followed by classification symbols)

C08K3/00-13/08; C08L1/00-101/14; C08F6/00-246/00; B32B1/00-43/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| Y | WO 2021/029355 A1 (MITSUBISHI CHEMICAL CORPORATION) 18 February 2021 (2021-02-18)<br>claims 1-3, paragraphs [0004], [0107]-[0120], examples 4-14, 18, 23 | 1-8 |
| Y | JP 2022-553228 A (BRASKEM S.A.) 22 December 2022 (2022-12-22)<br>claims 1-52, examples | 1-8 |
| Y | JP 2021-518873 A (BRASKEM S.A.) 05 August 2021 (2021-08-05)<br>claims 1-50, examples | 1-8 |
| Y | WO 2022/004782 A1 (KURARAY CO., LTD.) 06 January 2022 (2022-01-06)<br>claims 1-32, examples | 1-8 |
| Y | WO 2021/187337 A1 (SEKISUI CHEMICAL CO., LTD.) 23 September 2021 (2021-09-23)<br>claims 1-8, examples | 1-8 |

☐ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 March 2024** | **26 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

EP 4 663 701 A1

## INTERNATIONAL SEARCH REPORT
### Information on patent family members

International application No.

**PCT/JP2024/004028**

| Patent document cited in search report | | | Publication date (day/month/year) | Patent family member(s) | | | Publication date (day/month/year) |
|---|---|---|---|---|---|---|---|
| WO | 2021/029355 | A1 | 18 February 2021 | US | 2022/0135778 | A1 | |
| | | | | claims 1-3, paragraphs [0004], [0130]-[0144], examples 4-14, 18, 23 | | | |
| | | | | EP | 4011959 | A1 | |
| | | | | CN | 114127167 | A | |
| JP | 2022-553228 | A | 22 December 2022 | US | 2021/0108039 | A1 | |
| | | | | claims 1-20, examples | | | |
| | | | | WO | 2021/074696 | A2 | |
| | | | | EP | 4045319 | A2 | |
| | | | | BR | 112022007112 | A2 | |
| JP | 2021-518873 | A | 05 August 2021 | US | 2019/0315948 | A1 | |
| | | | | claims 1-36, examples | | | |
| | | | | WO | 2019/202405 | A1 | |
| | | | | EP | 3619259 | A1 | |
| | | | | EP | 4119605 | A1 | |
| | | | | CN | 112204090 | A | |
| | | | | KR | 10-2021-0005886 | A | |
| | | | | CA | 3097311 | A1 | |
| | | | | AR | 115362 | A1 | |
| | | | | BR | 112020021145 | A2 | |
| WO | 2022/004782 | A1 | 06 January 2022 | US | 2023/0257491 | A1 | |
| | | | | claims 1-32, examples | | | |
| | | | | CN | 115996962 | A | |
| | | | | TW | 202212313 | A | |
| | | | | DE | 112021003449 | T5 | |
| | | | | BR | 112022027048 | A2 | |
| WO | 2021/187337 | A1 | 23 September 2021 | (Family: none) | | | |

Form PCT/ISA/210 (patent family annex) (July 2022)

15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022045259 A